(19) **Europäisches Patentamt**
**European Patent Office**
**Office européen des brevets**

(11) **EP 4 374 997 A1**

(12) **EUROPEAN PATENT APPLICATION**
published in accordance with Art. 153(4) EPC

(43) Date of publication:
**29.05.2024 Bulletin 2024/22**

(21) Application number: **21956028.1**

(22) Date of filing: **03.09.2021**

(51) International Patent Classification (IPC):
**B23H 7/02** *(2006.01)*

(52) Cooperative Patent Classification (CPC):
**B23H 7/02**

(86) International application number:
**PCT/JP2021/032383**

(87) International publication number:
**WO 2023/032139 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventor: **FUNAKUBO, Ryuuki**
**Minamitsuru-gun, Yamanashi 401-0597 (JP)**

(74) Representative: **Keil & Schaafhausen**
**Patentanwälte PartGmbB**
**Bockenheimer Landstraße 25**
**60325 Frankfurt am Main (DE)**

(54) **DEVICE AND METHOD FOR CONTROLLING WIRE ELECTRICAL DISCHARGE MACHINE**

(57) This control device (30) for a wire electrical discharge machine (10) comprises: a machining control unit (310) which varies a first control quantity (V) in a first corner section (CI) and varies a second control quantity (F) in a second corner section (CO); and an adjustment unit (320) which adjusts each of the present first control quantity and the present second control quantity in an overlapping section (DS) in which the first and second control quantities vary in an overlapping manner. Within the overlapping section, the machining control unit performs control on the wire electrical discharge machine in accordance with the post-adjustment first control quantity and the post-adjustment second control quantity.

FIG. 2

EP 4 374 997 A1

**Description**

TECHNICAL FIELD

The present invention relates to a control device and a control method for a wire electrical discharge machine (device and method for controlling a wire electrical discharge machine).

BACKGROUND ART

WO 2015/063932 A1 discloses a wire electrical discharge machining apparatus that improves the machining accuracy of a corner shape by calculating an appropriate corner speed command.

SUMMARY OF THE INVENTION

In wire electrical discharge machining, in addition to control of a machining speed, a plurality of types of control such as control of a discharge voltage, control of a discharge frequency may be performed. In the wire electrical discharge machining apparatus disclosed in WO 2015/063932 A1, when machining of a series of corner shapes by wire electrical discharge is continuously performed, the fact that a plurality of types of control overlap each other is not taken into consideration. Therefore, there is a problem that the improvement level of the machining accuracy remains at a certain level.
The present invention has the object of solving the aforementioned problem.
According to a first aspect of the present invention, there is provided a control device for a wire electrical discharge machine configured to perform machining on a workpiece by generating electrical discharge at an inter-electrode gap formed between the workpiece and a wire electrode while moving the wire electrode relative to the workpiece along a machining path, including: a machining control unit configured to: control the wire electrical discharge machine in accordance with a plurality of control amounts based on a reference machining condition; in a first corner section, control the wire electrical discharge machine by changing at least one first control amount of the plurality of control amounts, based on a machining condition for the first corner section; and in a second corner section following the first corner section, control the wire electrical discharge machine by changing at least one second control amount of the plurality of control amounts, based on a machining condition for the second corner section, the second control amount being different from the first control amount; and an adjustment unit configured to, in an overlapping section in which change in the first control amount and change in the second control amount overlap each other, calculate a first ratio which is a ratio of a current change amount to a maximum change amount of the first control amount and a second ratio which is a ratio of a current change amount to a maximum change amount of the second control amount, and adjust each of the current first control amount and the current second control amount, based on the first ratio and the second ratio, wherein in the overlapping section in which change in the first control amount and change in the second control amount overlap each other, the machining control unit controls the wire electrical discharge machine in accordance with an adjusted first control amount and an adjusted second control amount.
According to a second aspect of the present invention, there is provided a control method for a wire electrical discharge machine configured to perform machining on a workpiece by generating electrical discharge at an inter-electrode gap formed between the workpiece and a wire electrode while moving the wire electrode relative to the workpiece along a machining path, including: performing machining control for: controlling the wire electrical discharge machine in accordance with a plurality of control amounts based on a reference machining condition; in a first corner section, controlling the wire electrical discharge machine by changing at least one first control amount of the plurality of control amounts, based on a machining condition for the first corner section; and, in a second corner section following the first corner section, controlling the wire electrical discharge machine by changing at least one second control amount of the plurality of control amounts, based on a machining condition for the second corner section, the second control amount being different from the first control amount; and performing adjustment for, in an overlapping section in which change in the first control amount and change in the second control amount overlap each other, calculating a first ratio which is a ratio of a current change amount to a maximum change amount of the first control amount and a second ratio which is a ratio of a current change amount to a maximum change amount of the second control amount, and adjusting each of the current first control amount and the current second control amount, based on the first ratio and the second ratio, wherein, when the machining control is performed, in the overlapping section in which change in the first control amount and change in the second control amount overlap each other, the wire electrical discharge machine is controlled in accordance with an adjusted first control amount and an adjusted second control amount.
According to the present invention, the accuracy of wire electrical discharge machining when corner sections are consecutively arranged is improved.

BRIEF DESCRIPTION OF DRAWINGS

FIG. 1 is a diagram showing the configuration of a wire electrical discharge machine including a control device;
FIG. 2 is a functional block diagram of the wire electrical discharge machine shown in FIG. 1;
FIG. 3 is a diagram showing an example of a corner path;
FIG. 4 is a diagram showing a state in which different controls related to a pulse voltage applied to an inter-electrode gap overlap each other;
FIG. 5 is a flowchart showing a control process of the wire electrical discharge machine by the control device in an embodiment; and
FIG. 6 is a flowchart showing a control process of the wire electrical discharge machine by the control device in Modification 1.

DETAILED DESCRIPTION OF THE INVENTION

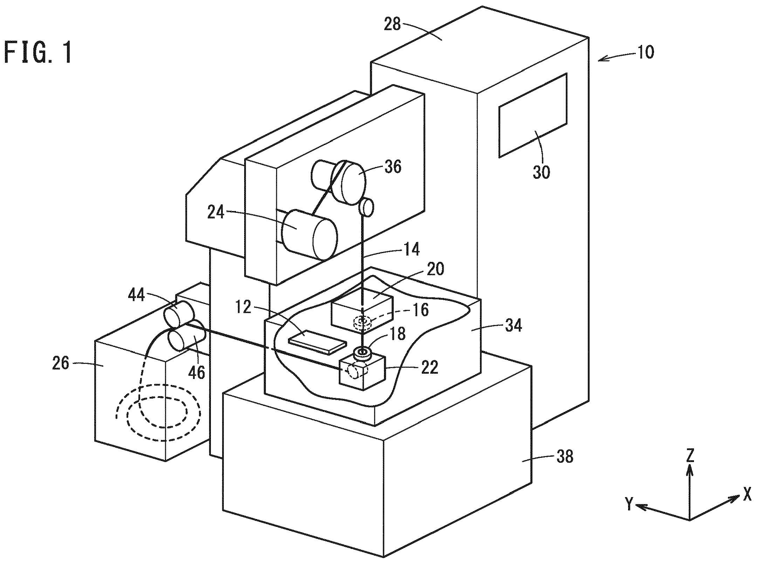

FIG. 1 is a diagram showing the configuration of a wire electrical discharge machine 10 including a control device 30. By applying a voltage across an inter-electrode gap formed between a wire electrode 14 and an object to be machined (a workpiece), and thereby generating electrical discharge, the wire electrical discharge machine 10 performs electrical discharge machining on the workpiece. The wire electrical discharge machine 10 carries out electrical discharge machining in a state while causing the wire electrode 14 to move relatively to the workpiece along a machining path specified by a predetermined program. The relative movement between the wire electrode 14 and the workpiece is performed, for example, by causing a table 12 that supports the workpiece to be moved.

The wire electrical discharge machine 10 includes an upper wire guide 16, a lower wire guide 18, an upper guide block 20, and a lower guide block 22. The upper wire guide 16 supports the wire electrode 14 on an upper side (a side in the +Z direction) of the table 12. The lower wire guide 18 supports the wire electrode 14 on a lower side (a side in the -Z direction) of the table 12. The upper wire guide 16 is disposed on the upper guide block 20. The lower wire guide 18 is disposed on the lower guide block 22. The wire electrode 14 is supplied from a wire bobbin 24 in a feed-out direction at a predetermined speed. The wire electrode 14 passes through a roller 36, the upper wire guide 16, and the lower wire guide 18, is sandwiched and gripped between a pinch roller 44 and a feed roller 46, and is collected in a collection box 26. Furthermore, the wire electrical discharge machine 10 includes the control device 30, and a machining power supply 28 that supplies a voltage across the inter-electrode gap.

The control device 30 includes a processing circuit and a memory in which programs etc. are stored. By executing a program, the processing circuit functions as the control device 30 of the present embodiment. The control device 30 controls machining of the workpiece by the wire electrical discharge machine 10. The memory includes a volatile memory such as a RAM or the like, and a nonvolatile memory such as a ROM and a flash memory or the like. The processing circuit includes a processor such as a CPU or the like. The X direction, Y direction, and Z direction shown in FIG. 1 are orthogonal to each other, and gravity acts in the -Z direction.

In the case that wire electrical discharge machining is carried out, a work pan 34 may store a dielectric working fluid. In this case, the table 12, the workpiece, the upper wire guide 16, the upper guide block 20, the lower wire guide 18, and the lower guide block 22 are immersed in the working fluid. The upper wire guide 16 may eject the working fluid to the inter-electrode gap formed between the wire electrode 14 and the workpiece. This can prevent machining chips (sludge) from floating in the inter-electrode gap, and as a result, machining accuracy is improved. The lower wire guide 18 may also eject the working fluid to the inter-electrode gap. The work pan 34 is disposed on a bed 38.

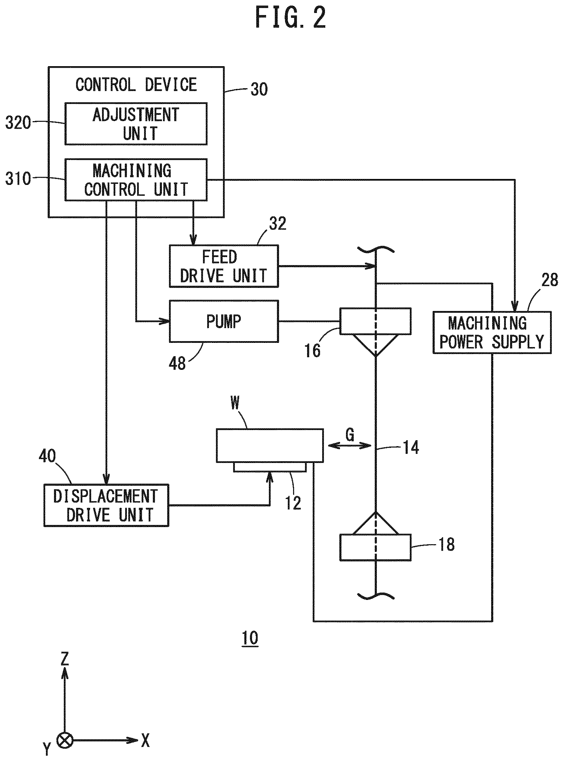

FIG. 2 is a functional block diagram of the wire electrical discharge machine 10 shown in FIG. 1. FIG. 2 shows part of the configuration of the wire electrical discharge machine 10 shown in FIG. 1. FIG. 2 further shows the workpiece W, a displacement drive unit 40, a feed drive unit 32, and a pump 48, none of which are shown in FIG. 1. The workpiece W is mounted on the table 12. The machining power supply 28 repeatedly applies a pulse voltage to the inter-electrode gap G formed between the wire electrode 14 and the workpiece W.

The displacement drive unit 40 drives the table 12 in order to cause the wire electrode 14 to move relatively to the workpiece W in the X direction and the Y direction. The displacement drive unit 40 includes an X motor, a Y motor, an X drive transmission mechanism, and a Y drive transmission mechanism. The X motor is a motor for moving the table 12 in the X direction. The Y motor is a motor for moving the table 12 in the Y direction. The X drive transmission mechanism is a mechanism for converting the rotational motion of the X motor into linear motion of the table 12 in the X direction. The Y drive transmission mechanism is a mechanism for converting the rotational motion of the Y motor into linear motion of the table 12 in the Y direction. Each of the X drive transmission mechanism and the Y drive transmission mechanism is constituted by a ball screw, a nut installed on the table 12, and the like. Incidentally, each of the X motor and the Y motor is provided with an encoder (a rotational position detection sensor) that detects the rotational position.

Instead of the above displacement drive unit 40, a displacement drive unit that drives the upper guide block 20 and the lower guide block 22 in the X direction and the Y direction may be provided. In addition to the above displacement drive unit 40, another displacement drive unit that drives the upper guide block 20 and the lower guide block 22 in the X direction and the Y direction may be provided.

The feed drive unit 32 includes the roller 36 and the feed motor. By rotating, the roller 36 feeds out the wire electrode 14 that is wound around the wire bobbin 24, toward the workpiece W. The feed motor causes the roller 36 to rotate. The feed motor is provided with the encoder (rotational position detection sensor) that detects the rotational position.

The pump 48 pumps up the working fluid purified by a working fluid supply device (not shown) and supplies the pumped working fluid to the upper wire guide 16. The upper wire guide 16 ejects the working fluid to the inter-electrode gap G. The pump 48 may supply the pumped-up working fluid to the lower wire guide 18. The lower wire guide 18 ejects the working fluid to the inter-electrode gap G.

In the present embodiment, the wire electrical discharge machine 10 that machines a workpiece W along a corner path including corner sections having different shapes will be described. In the present embodiment, the corner sections having different shapes are an inner corner section and an outer corner section following the inner corner section. The control device 30 of the present embodiment includes a machining control unit 310 and an adjustment unit 320. At least a part of the machining control unit 310 and the adjustment unit 320 may be realized by using an ASIC, a FPGA, or another integrated circuit.

The machining control unit 310 controls the feed drive unit 32, the displacement drive unit 40, the machining power supply 28, and the pump 48. By controlling the feed drive unit 32, the machining control unit 310 feeds the wire electrode 14 for performing electrical discharge machining on the workpiece W from the upper wire guide 16 toward the lower wire guide 18 at a feedrate that is specified by the machining conditions. By controlling the displacement drive unit 40, the machining control unit 310 causes the wire electrode 14 to move relatively to the workpiece W in the X direction and the Y direction along a machining path specified by the machining program. The machining control unit 310 may relatively move the wire electrode 14 based on the machining speed specified by the machining conditions. Further, by controlling the pump 48, the machining control unit 310 may cause at least one of the upper wire guide 16 or the lower wire guide 18 to eject the working fluid to the inter-electrode gap G based on the ejection flow rate specified by the machining conditions.

By controlling the machining power supply 28, the machining control unit 310 causes the machining power supply 28 to repeatedly apply a pulse voltage to the inter-electrode gap G. The machining control unit 310 may apply a pulse voltage of a magnitude specified by the machining conditions, to the inter-electrode gap G. The machining control unit 310 may apply a pulse voltage to the inter-electrode gap G with the number of pulses specified by the machining conditions. In the present embodiment, the "number of pulses" means the number of pulses per unit time.

The machining control unit 310 controls at least one of the machining power supply 28, the displacement drive unit 40, and the like, in accordance with a plurality of control amounts specified by the machining conditions. The plurality of control amounts include, for example, a pulse voltage control amount, a number-of-pulses control amount, a machining speed control amount, a working fluid control amount, and the like. The pulse voltage control amount is a control amount for controlling the magnitude of the pulse voltage applied to the inter-electrode gap G when the machining power supply 28 generates electrical discharge, to a pulse voltage having a magnitude specified by the machining conditions. The number-of-pulses control amount is a control amount for controlling the number of pulses per unit time of the pulse voltage applied to the inter-electrode gap G when the machining power supply 28 generates electrical discharge, to the number of pulses specified by the machining conditions. The machining speed control amount is a control amount for controlling the speed at which the displacement drive unit 40 machines the workpiece W, to a machining speed specified by the machining conditions. The working fluid control amount is a control amount for controlling the ejection flow amount per unit time of the working fluid supplied to the inter-electrode gap G in the work pan 34, to an ejection flow rate specified by the machining conditions, when the machining power supply 28 generates electrical discharge.

In the inner corner section, the machining control unit 310 changes a first control amount, based on the machining conditions for the inner corner section. In the outer corner section, the machining control unit 310 changes a second control amount, based on the machining conditions for the outer corner section. The first control amount and the second control amount are different control amounts. In the present embodiment, the first control amount is a pulse voltage control amount, and the second control amount is a number-of-pulses control amount.

In wire electrical discharge machining, there may be overlapping sections where changes in some of the plurality of control amounts overlap each other. The adjustment unit 320 adjusts such control amounts in the overlapping section. In the present embodiment, change in the first control amount and change in the second control amount described above overlap each other, in the overlapping section.

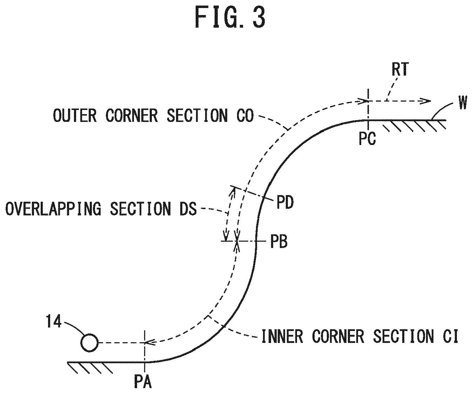

FIG. 3 is a diagram illustrating an example of a corner path. As shown in FIG. 3, the machining path RT includes a straight path, a corner path following the straight path, and another straight path following the corner path. The corner path includes an inner corner section CI and an outer corner section CO following the inner corner section CI. The machining path RT along which the wire electrode 14 moves relative to the workpiece W starts from a section of the straight path (straight path section) lying before a position PA. Next, the curved inner corner section CI lies from the position PA to a position PB. Subsequently, the curved outer corner section CO lies from the position PB to a position PC. There is a section of the straight path beyond the position PC. In the inner corner section CI, the surface of the workpiece W is curved so as to cover the machining path RT. Conversely, in the outer corner section CO, the surface of the workpiece W is curved so as to warp toward the machining path RT.

Until the wire electrode 14 enters the corner path, the machining control unit 310 controls the wire electrical discharge machine 10 in accordance with a plurality of control amounts based on reference machining conditions. In the present embodiment, the plurality of control amounts include at least a first control amount V and a second control amount F. The machining control unit 310 sets a reference control amount V0 as the first control amount V based on the reference machining conditions. The machining control unit 310 sets the reference control amount F0 as the second control amount F based on the reference machining conditions.

When the wire electrode 14 moves relative to the workpiece W and passes through the position PA, the machining control unit 310 gradually changes the first control amount V from the reference control amount V0 until the first control amount V reaches a maximum control amount VH, based on the machining conditions for the inner corner section CI. The maximum control amount VH is specified by the machining conditions for the inner corner section CI. Note that, concerning the control amounts other than the first control amount V, the control amounts based on the reference machining conditions are used as they are.

When the wire electrode 14 moves relative to the workpiece W and passes through the position PB on the machining path RT, the machining control unit 310 gradually changes the first control amount V from the maximum control amount VH until the first control amount V reaches the reference control amount V0. Similarly, when the wire electrode 14 moves relative to the workpiece W and passes through the position PB, the machining control unit 310 gradually changes the second control amount F from the reference control amount F0 until the second control amount F reaches the maximum control amount FH, based on the machining conditions for the outer corner section CO. The maximum control amount FH is specified by the machining conditions for the outer corner section CO. Note that, concerning the control amounts other than the second control amount F, the control amounts based on the reference machining conditions are used as they are, except for the first control amount V that changes toward the reference control amount V0.

When the wire electrode 14 moves relative to the workpiece W and reaches the position PB, an overlapping section DS appears in which the machining control according to the first control amount V exceeding the reference control amount V0 and the machining control according to the second control amount F exceeding the reference control amount F0 overlap. As shown in FIG. 3, the overlapping section DS is a section from the position PB to the position PD on the machining path RT. The overlapping section DS is a section in which the first control amount V is different from the reference control amount V0 and the second control amount F is different from the reference control amount F0. That is, the section in which the first control amount V changes from the reference control amount V0 and the second control amount F changes from the reference control amount F0 is the overlapping section DS.

When the wire electrode 14 moves relative to the workpiece W and passes through the position PD, the machining control unit 310 keeps the second control amount F at the maximum control amount FH. When the wire electrode 14 moves relative to the workpiece W and passes through the position PC, the machining control unit 310 gradually changes the second control amount F from the maximum control amount FH until the second control amount F reaches the reference control amount F0.

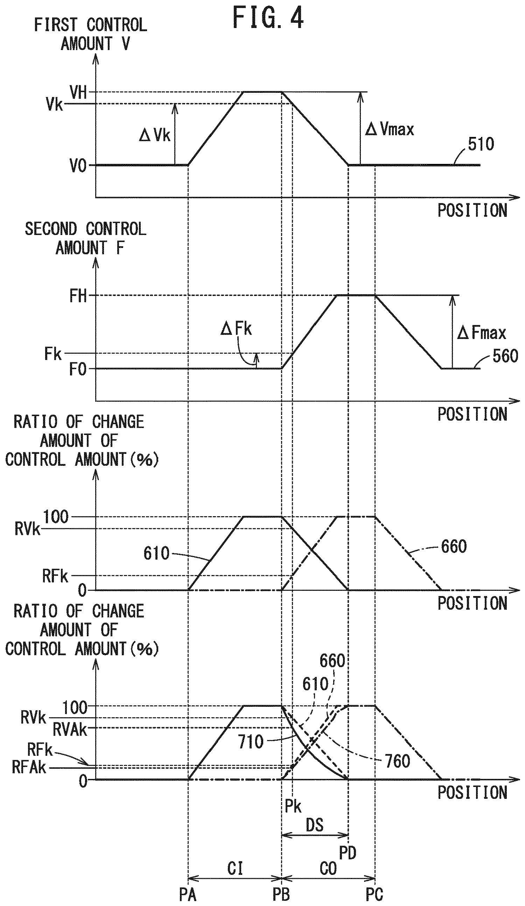

FIG. 4 is a diagram showing a state in which different controls related to the pulse voltage applied to the inter-electrode gap G overlap each other. Graphs 510 and 560 show how the first control amount V and the second control amount F change in accordance with a change in the relative position of the wire electrode 14 with respect to the workpiece W, respectively. However, in the graphs 510 and 560, overlapping of different controls in the overlapping section DS is not taken into account.

The relative position, with respect to the workpiece W, of the wire electrode 14 moving by electrical discharge machining is determined as a position on the machining path RT specified by the machining program. As described above, the first control amount V increases based on the machining conditions for the inner corner section CI, and the second control amount F increases based on the machining conditions for the outer corner section CO. As shown in the graphs 510 and 560, in the section of the straight path before the position PA on the machining path RT, the first control amount V and the second control amount F are equal to the reference control amount V0 and the reference control amount F0, respectively.

As shown in the graph 510, in the inner corner section CI, the first control amount V gradually increases from the reference control amount V0, and reaches the maximum control amount VH. Thereafter, is kept at the maximum control amount VH. As shown in the graph 560, the second control amount F is maintained at the reference control amount F0 in the same inner corner section CI.

As shown in the graph 560, in the outer corner section CO, the second control amount F gradually increases from the reference control amount F0 and reaches the maximum control amount FH. Thereafter, the second control amount F is maintained at the maximum control amount FH. As shown in the graph 510, in the overlapping section DS, the first control amount V gradually decreases from the maximum control amount VH and reaches the reference control amount V0. As shown in the graph 510, after the machining in the overlapping section DS is finished, the first control amount V is maintained at the reference control amount V0 in the section from the position PD to the position PC included in the outer corner section CO, on the machining path RT. In the example shown in the graph 560, the position at which the second control amount F reaches the maximum control amount FH is before the position PD and within the overlapping section DS. However, the position at which the second control amount F reaches the maximum control amount FH may be beyond the position PD and outside the overlapping section DS.

As shown in the graph 510, the first control amount V is maintained at the reference control amount V0 in the section of the straight path beyond the position PC on the machining path RT. As shown in the graph 560, in the same section of the straight path, the second control amount F gradually decreases from the maximum control amount FH and reaches the reference control amount F0. As shown in the graph 560, the second control amount F is kept at the reference control amount F0 in a section on the machining path RT after the second control amount F has reached the reference control amount F0.

As shown in the graph 510, the difference between the current first control amount Vk and the reference control amount V0 at the current position Pk on the machining path RT is defined as a current change amount $\Delta Vk$. As shown in the graph 510, the difference between the maximum control amount VH of the first control amount V and the reference control amount V0 is defined as the maximum change amount $\Delta Vmax$. The current change amount $\Delta Vk$ and the maximum change amount $\Delta Vmax$ are expressed by Expressions (1) and (2), respectively. The current change amount $\Delta Vk$ is a change amount of the current first control amount Vk from the reference control amount V0. The maximum change amount $\Delta Vmax$ is a change amount of the maximum control amount VH from the reference control amount V0. The adjustment unit 320 calculates a first ratio RVk as a ratio of the current change amount $\Delta Vk$ to the maximum change amount $\Delta Vmax$ of the first control amount V. As shown in Equation (3), the first ratio RVk is a value of a ratio between the current change amount $\Delta Vk$ and the maximum change amount $\Delta Vmax$. For convenience, FIG. 4 shows the first ratio RVk as a percentage of the ratio between the current change amount $\Delta Vk$ and the maximum change amount $\Delta Vmax$.

$$\Delta Vk = Vk - V0 \qquad ...(1)$$

$$\Delta Vmax = VH - V0 \qquad ...(2)$$

$$RVk = \Delta Vk/\Delta Vmax \qquad ...(3)$$

As shown in the graph 560, the difference between the current second control amount Fk and the reference control amount F0 at the current position Pk on the machining path RT is defined as a current change amount $\Delta Fk$. As shown in the graph 560, the difference between the maximum control amount FH of the second control amount F and the reference control amount F0 is defined as the maximum change amount $\Delta Fmax$. The current change amount $\Delta Fk$ and the maximum change amount $\Delta Fmax$ are expressed by Equations (4) and (5), respectively. The current change amount $\Delta Fk$ is a change amount of the current second control amount Fk from the reference control amount F0. The maximum change amount $\Delta Fmax$ is a change amount of the maximum control amount FH from the reference control amount F0. The adjustment unit 320 calculates the second ratio RFk as a ratio of the current change amount $\Delta Fk$ to the maximum change amount $\Delta Fmax$ of the second control amount F. As shown in Equation (6), the second ratio RFk is a value of a ratio between the current change amount $\Delta Fk$ and the maximum change amount $\Delta Fmax$. For convenience, FIG. 4 shows the second ratio RFk as a percentage of the ratio between the current change amount $\Delta Fk$ and the maximum change amount $\Delta Fmax$.

$$\Delta Fk = Fk - F0 \qquad ...(4)$$

$$\Delta Fmax = FH - F0 \qquad ...(5)$$

$$RFk = \Delta Fk/\Delta Fmax \qquad ...(6)$$

A graph 610 shows a change in the first ratio RVk obtained by the adjustment unit 320 performing calculation using Expression (3), in accordance with the position on the machining path RT. A graph 660 shows a change in the second ratio RFk obtained by the adjustment unit 320 performing calculation using Expression (6), in accordance with the position on the machining path RT. When Expressions (3) and (6) are modified using Expressions (1) and (4), respectively, the first control amount Vk shown in the graph 510 and the second control amount Fk shown in the graph 560 are expressed by Expressions (7) and (8), respectively.

$$Vk = V0 + \Delta Vmax \times RVk \qquad ...(7)$$

$$Fk = F0 + \Delta Fmax \times RFk \qquad ...(8)$$

In the graphs 510, 560, 610, and 660, overlapping of different controls in the overlapping section DS is not taken into account. That is, when the position Pk is within the overlapping section DS, the second control amount Fk shown in Equation (8) does not take into account the fact that the control according to the second control amount Fk and the control according to the first control amount Vk shown in Equation (7) are simultaneously performed. Therefore, there is a risk that the accuracy of the wire electrical discharge machining in the overlapping section DS may be reduced. Further, there is a risk that the wire electrode 14 may be broken during the wire electrical discharge machining in the overlapping section DS. The reason is that the discharge energy in the overlapping section DS fluctuates and becomes unstable.

In order to prevent the occurrence of the above-described problem, in the present embodiment, the first control amount V and the second control amount F are adjusted in consideration of the fact that different controls overlap each other in the overlapping section DS. The adjustment unit 320 adjusts each of the first control amount V and the second control amount F in the overlapping section DS in which change in the first control amount V and change in the second control amount F overlap.

The adjustment unit 320 adjusts the first control amount V in the overlapping section DS based on the first ratio RVk and the second ratio RFk. More specifically, the adjustment unit 320 calculates the first adjustment ratio RVAk using Equation (9). The first adjustment ratio RVAk is used for adjustment of the first control amount V. As shown in Equation (9), the first adjustment ratio RVAk is obtained as a ratio of the first ratio RVk to the sum of the first ratio RVk and the second ratio RFk.

$$RVAk = RVk/(RVk + RFk) \qquad ...(9)$$

The adjustment unit 320 adjusts the second control amount F in the overlapping section DS based on the first ratio RVk and the second ratio RFk. More specifically, the adjustment unit 320 calculates the second adjustment ratio RFAk using Equation (10). As shown in Equation (10), the second adjustment ratio RFAk is obtained as a ratio of the second ratio RFk to the sum of the first ratio RVk and the second ratio RFk. As is clear from Expressions (9) and (10), the sum of the first adjustment ratio RVAk and the second adjustment ratio RFAk is 1. As shown in FIG. 4, when the first adjustment ratio RVAk and the second adjustment ratio RFAk are expressed in percentage, the sum of the first adjustment ratio RVAk and the second adjustment ratio RFAk is 100%.

$$RFAk = RFk/(RVk + RFk) \qquad ...(10)$$

A change in the first adjustment ratio RVAk according to the position on the machining path RT is shown in a graph 710. A change in the second adjustment ratio RFAk according to the position on the machining path RT is shown in a graph 760. In the overlapping section DS, the first adjustment ratio RVAk and the second adjustment ratio RFAk are calculated at each position Pk. In the overlapping section DS, the adjustment unit 320 adjusts the first control amount Vk and the second control amount Fk at each position Pk, based on the first adjustment ratio RVAk and the second adjustment ratio RFAk.

The adjusted first control amount (first control amount after the adjustment) VAk and the adjusted second control amount (second control amount after the adjustment) FAk in the overlapping section DS are calculated using Equation (11) and Equation (12), respectively. As shown in Equation (11), the adjusted first control amount VAk is obtained by adding the reference control amount V0 to a value obtained by multiplying the maximum change amount ΔVmax of the first control amount V by the first adjustment ratio RVAk. As shown in Equation (12), the adjusted second control amount FAk is obtained by adding the reference control amount F0 to a value obtained by multiplying the maximum change amount ΔFmax of the second control amount F by the second adjustment ratio RFAk.

$$VAk = V0 + \Delta Vmax \times RVAk \qquad \ldots(11)$$

$$FAk = F0 + \Delta Fmax \times RFAk \qquad \ldots(12)$$

In the overlapping section DS, the machining control unit 310 controls the machining power supply 28 of the wire electrical discharge machine 10 in accordance with the adjusted first control amount VAk and the adjusted second control amount FAk based on Equations (11) and (12). The accuracy of wire electrical discharge machining in the overlapping section DS is improved as compared with the case where machining control is performed in accordance with the first control amount Vk and the second control amount Fk based on Expressions (7) and (8). Further, the possibility of breakage of the wire electrode 14 during wire electrical discharge machining in the overlapping section DS is reduced.

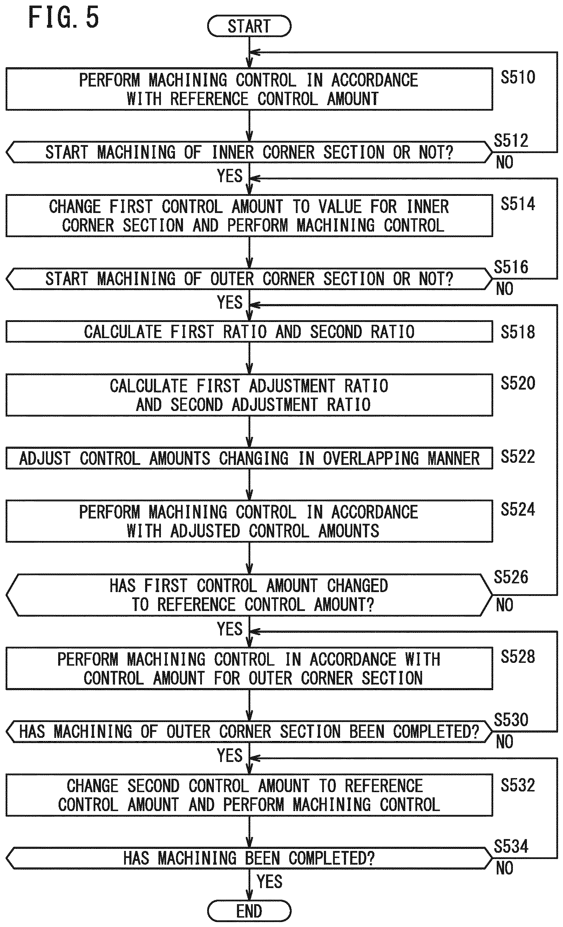

FIG. 5 is a flowchart showing a control process of the wire electrical discharge machine 10 by the control device 30 in the present embodiment. When the present control process is started, in step S510, the machining control unit 310 sets the reference control amount V0 as the first control amount V and sets the reference control amount F0 as the second control amount F. The machining control unit 310 controls electrical discharge machining performed by the wire electrical discharge machine 10 in accordance with the reference control amount V0 and the reference control amount F0 based on the reference machining conditions. In this way, the machining control unit 310 performs machining control of the section of the straight path from the machining start position on the machining path RT.

In step S512, the machining control unit 310 determines whether or not to start machining of the inner corner section CI that starts from the position PA on the machining path RT. When the wire electrode 14 relatively moves, with respect to the workpiece W, from the machining start position and reaches the position PA, the determination result in step S512 is YES, and then the control process proceeds to step S514. If the wire electrode 14 has not yet reached the position PA, the determination result in step S512 is NO, and the control process returns to step S510.

In step S514, the machining control unit 310 changes the first control amount V to a value for the inner corner section CI to perform the machining control. The machining control unit 310 gradually increases the first control amount V until the first control amount V reaches the maximum control amount VH that is based on the machining conditions for the inner corner section CI. The machining control unit 310 controls the electrical discharge machining performed by the wire electrical discharge machine 10 in accordance with the first control amount V that gradually increases. When the first control amount V reaches the maximum control amount VH, the first control amount V thereafter is maintained at the maximum control amount VH. In this way, the machining control unit 310 performs machining control of the inner corner section CI from the position PA.

In step S516, the machining control unit 310 determines whether or not to start machining of the outer corner section CO that starts from the position PB on the machining path RT. When the wire electrode 14 relatively moves, with respect to the workpiece W, from the position PA and reaches the position PB, the determination result in step S516 is YES, and then the control process proceeds to step S518. If the wire electrode 14 has not yet reached the position PB, the determination result in step S516 is NO, and the control process returns to step S514.

In the overlapping section DS from the position PB to the position PD in the outer corner section CO, the machining control according to the first control amount V exceeding the reference control amount V0 and the machining control according to the second control amount F exceeding the reference control amount F0 overlap each other. If the determination result in step S516 is YES, the machining control unit 310 determines to start machining of the overlapping section DS in the outer corner section CO.

In step S518, the adjustment unit 320 calculates the first ratio RVk and the second ratio RFk using Equations (1) to (6).

In step S520, the adjustment unit 320 calculates the first adjustment ratio RVAk and the second adjustment ratio RFAk using Equations (9) and (10).

In step S522, the adjustment unit 320 adjusts the first control amount Vk and the second control amount Fk, which change overlappingly or in an overlapping manner based on the machining conditions for the outer corner section CO, based on the first adjustment ratio RVAk and the second adjustment ratio RFAk. The adjustment unit 320 calculates the adjusted first control amount VAk and the adjusted second control amount FAk in the overlapping section DS using Expression (11) and Expression (12) .

In step S524, the machining control unit 310 controls the electrical discharge machining by the wire electrical discharge machine 10 in accordance with the adjusted first control amount VAk and the adjusted second control amount FAk, in the overlapping section DS.

In step S526, the machining control unit 310 determines whether or not the first control amount V has changed to the reference control amount V0. When the first control amount V has changed to the reference control amount V0, the determination result in step S526 is YES, and the control process proceeds to step S528. The position of the wire electrode 14 when the first control amount V has changed and reached to the reference control amount V0 is referred to as a position PD. When the wire electrode 14 has reached the position PD, the machining of the overlapping section DS is finished. If the first control amount V has not yet reached the reference control amount V0, the determination result in step S526 is NO, and the control process returns to step S518. The wire electrode 14 has not yet reached the position PD and is relatively moving within the overlapping section DS.

The section from the position PD to the position PC, which is located beyond the overlapping section DS, is a part of the outer corner section CO. In step S528, the machining control unit 310 controls the electrical discharge machining by the wire electrical discharge machine 10 in accordance with the second control amount F that is increased or maintained at the maximum control amount FH, based on the machining conditions for the outer corner section CO.

In step S530, the machining control unit 310 determines whether or not the machining of the outer corner section CO has been completed. When the wire electrode 14 relatively moves, with respect to the workpiece W, from the position PD and reaches the position PC, the determination result in step S530 is YES, and then the control process proceeds to step S532. If the wire electrode 14 has not yet reached the position PC, the determination result in step S530 is NO, and the control process returns to step S528.

In step S532, the machining control unit 310 gradually decreases the second control amount F based on the machining conditions for the section of the straight path. The machining control unit 310 controls the electrical discharge machining by the wire electrical discharge machine 10 in accordance with the second control amount F that gradually decreases. When the second control amount F reaches the reference control amount F0, the second control amount F is thereafter maintained at the reference control amount F0. In this way, the machining control unit 310 performs machining control of the section of the straight path located beyond the position PC on the machining path RT.

In step S534, the machining control unit 310 determines whether or not the machining of the section of the straight path beyond the position PC has been completed. When the wire electrode 14 moves relative to the workpiece W and reaches the machining end position on the machining path RT, the determination result in step S534 is YES, and the control process ends. If the wire electrode 14 has not yet reached the machining end position, the determination result in step S534 is NO, and the control process returns to step S532.

[Modifications]

The above-described embodiment may be modified in the following manner.

(Modification 1)

In the above-described embodiment, the adjustment unit 320 calculates the first adjustment ratio RVAk and the second adjustment ratio RFAk using Equation (9) and Equation (10) (step S520 in FIG. 5). A weighting factor larger than 1 may be applied to at least one of the first ratio RVk or the second ratio RFk used for the above calculation. A control amount corresponding to the ratio to which a larger weighting factor is applied has a larger influence on the machining control in the overlapping section DS.

For example, when the weighting factor $\alpha$ larger than 1 is applied to the second ratio RFk, the adjustment unit 320 calculates the first adjustment ratio RVAk and the second adjustment ratio RFAk using Equation (13) and Equation (14). The second control amount F has a larger influence on the machining control in the overlapping section DS than the first control amount V.

$$\mathrm{RVAk \; = \; RVk/(RVk \; + \; \alpha \; \times \; RFk)} \qquad ...(13)$$

$$\mathrm{RFAk \; = \; \alpha \; \times \; RFk/(RVk \; + \; \alpha \; \times \; RFk)} \qquad ...(14)$$

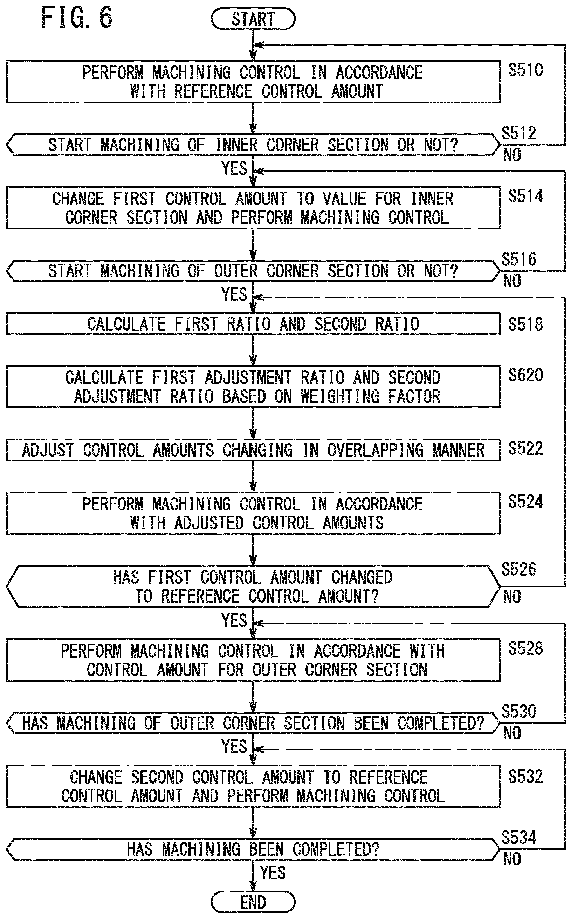

FIG. 6 is a flowchart showing a control process of the wire electrical discharge machine 10 by the control device 30 in Modification 1. Reference numerals, which are given to respective steps of the control process shown in FIG. 6, coincide with the reference numerals given to respective steps of the control process shown in FIG. 5, except for step S620, and the coincidence indicates that the same steps are executed. Therefore, the description of the processes from step S510 to step S518 and the processes from step S522 to step S534 in FIG. 6 will be omitted, and only the process in step S620 will be described.

When the process of step S518 is completed, the control process proceeds to step S620. In step S620, the adjustment unit 320 calculates the first adjustment ratio RVAk and the second adjustment ratio RFAk, based on the

weighting factor $\alpha$ using Equations (13) and (14). When the process of step S620 is completed, the control process proceeds to step S522.

(Modification 2)

In the above embodiment, the first control amount is the pulse voltage control amount, and the second control amount is the number-of-pulses control amount, but the control amounts are not limited to these control amounts. For example, the first control amount may be a machining speed control amount. The second control amount may be a dielectric working fluid control amount.

(Modification 3)

At least one of the first control amount or the second control amount may be a plurality of control amounts. For example, in the inner corner section CI, the machining speed control amount may increase together with the pulse voltage control amount. In the outer corner section CO following the inner corner section CI, the dielectric working fluid control amount may increase together with the number-of-pulses control amount. In this case, the first control amount that the machining control unit 310 changes based on the machining conditions for the inner corner section CI is the pulse voltage control amount and the machining speed control amount. The second control amount that the machining control unit 310 changes based on the machining conditions for the outer corner section CO is the number-of-pulses control amount and the dielectric working fluid control amount.

(Modification 4)

In the above-described embodiment and modifications, the inner corner section CI is followed by the outer corner section CO in the corner path on the machining path RT. The outer corner section CO may be followed by the inner corner section CI. In this case, the overlapping section is included in the inner corner section CI. The start point of the overlapping section coincides with the start point of the inner corner section CI that follows the outer corner section CO.

(Modification 5)

The above-described embodiment and modifications may be combined as desired.

[Inventions that can be Obtained from the Embodiment]

The invention that can be grasped from the above-described embodiment and the modifications thereof will be described below.

(1) The control device (30) for the wire electrical discharge machine (10) configured to perform machining on the workpiece (W) by generating electrical discharge at the inter-electrode gap (G) formed between the workpiece and the wire electrode (14) while moving the wire electrode relative to the workpiece along the machining path (RT), includes: the machining control unit (310) configured to: control the wire electrical discharge machine in accordance with the plurality of control amounts based on the reference machining condition; in the first corner section (CI), control the wire electrical discharge machine by changing at least one first control amount (V) of the plurality of control amounts, based on the machining condition for the first corner section; and in the second corner section (CO) following the first corner section, control the wire electrical discharge machine by changing at least one second control amount (F) of the plurality of control amounts, based on the machining condition for the second corner section, the second control amount being different from the first control amount; and the adjustment unit (320) configured to, in the overlapping section (DS) in which change in the first control amount and change in the second control amount overlap each other, calculate the first ratio (RVk) which is the ratio of the current change amount ($\Delta$Vk) to the maximum change amount ($\Delta$Vmax) of the first control amount and the second ratio (RFk) which is the ratio of the current change amount ($\Delta$Fk) to the maximum change amount ($\Delta$Fmax) of the second control amount, and adjust each of the current first control amount and the current second control amount, based on the first ratio and the second ratio, wherein in the overlapping section in which change in the first control amount and change in the second control amount overlap each other, the machining control unit controls the wire electrical discharge machine in accordance with the adjusted first control amount and the adjusted second control amount. This improves the accuracy of wire electrical discharge machining in the overlapping section occurring when there are a series of corner sections. Further, the possibility of wire electrode breakage during wire electrical discharge machining in the overlapping section is reduced.

(2) The adjustment unit may calculate the first adjustment ratio (RVAk) and the second adjustment ratio (RFAk) based on the first ratio and the second ratio, adjust the current first control amount based on the first adjustment ratio, and adjust the current second control amount based on the second adjustment ratio. This improves the accuracy of wire electrical discharge machining in the overlapping section occurring when a series of corner sections are set. Further, the possibility of wire electrode breakage during wire electrical discharge machining in the overlapping section is reduced.

(3) The sum of the first adjustment ratio and the second adjustment ratio may be 100%. This improves the accuracy of wire electrical discharge machining in the overlapping section occurring when corner sections are serially arranged. Further, the possibility of wire electrode breakage during wire electrical discharge machining in the overlapping section is reduced.

(4) The adjustment unit may calculate the first adjustment ratio and the second adjustment ratio based on the first ratio, the second ratio, and the predetermined weighting factor ($\alpha$) applied to at least one of the first ratio or the second ratio. Thus, the control amount corresponding to one of the first ratio and the second ratio to which a larger weighting factor is applied can have a larger influence on the machining control in the overlapping section than the control amount corresponding to the other ratio. Further, it is possible to facilitate fine adjustment of the degree of change in the control amount corresponding to the ratio to which the weighting factor is applied.

(5) Each of the first control amount and the second control amount may include at least one of the control amount for controlling the speed at which the wire electrical discharge machine performs the machining on the workpiece, the control amount for controlling the magnitude of the pulse voltage applied to the inter-electrode gap when the wire electrical discharge machine generates the electrical discharge, the control amount for controlling the number of pulses per unit time of the pulse voltage applied to the inter-electrode gap when the wire electrical discharge machine generates the electrical discharge, or the control amount for controlling the ejection flow amount per unit time of the dielectric working fluid supplied to the inter-electrode gap when the wire electrical discharge machine generates the electrical discharge. This may further improve the accuracy of wire electrical discharge machining in the overlapping section occurring when there are a series of the corner sections. In addition, the possibility of wire electrode breakage during wire electrical discharge machining in the overlapping section may be further reduced.

(6) The control method for the wire electrical discharge machine (10) configured to perform machining on the workpiece (W) by generating electrical discharge at the inter-electrode gap (G) formed between the workpiece and the wire electrode (14) while moving the wire electrode relative to the workpiece along the machining path (RT), includes: performing machining control for: controlling the wire electrical discharge machine in accordance with the plurality of control amounts based on the reference machining condition; in the first corner section (CI), controlling the wire electrical discharge machine by changing at least one first control amount (V) of the plurality of control amounts, based on the machining condition for the first corner section; and, in the second corner section (CO) following the first corner section, controlling the wire electrical discharge machine by changing at least one second control amount (F) of the plurality of control amounts, based on the machining condition for the second corner section, the second control amount being different from the first control amount; and performing adjustment for, in the overlapping section (DS) in which change in the first control amount and change in the second control amount overlap each other, calculating the first ratio (RVk) which is the ratio of the current change amount ($\Delta$Vk) to the maximum change amount ($\Delta$Vmax) of the first control amount and the second ratio (RFk) which is the ratio of the current change amount ($\Delta$Fk) to the maximum change amount ($\Delta$Fmax) of the second control amount, and adjusting each of the current first control amount and the current second control amount, based on the first ratio and the second ratio, wherein, when the machining control is performed, in the overlapping section in which change in the first control amount and change in the second control amount overlap each other, the wire electrical discharge machine is controlled in accordance with the adjusted first control amount and the adjusted second control amount. This improves the accuracy of wire electrical discharge machining in the overlapping section occurring when there are a series of corner sections. Further, the possibility of wire electrode breakage during wire electrical discharge machining in the overlapping section is reduced.

(7) When the adjustment is performed, the first adjustment ratio (RVAk) and the second adjustment ratio (RFAk) may be calculated based on the first ratio and the second ratio, the current first control amount may be adjusted based on the first adjustment ratio, and the current second control amount may be adjusted based on the second adjustment ratio. This improves the accuracy of wire electrical discharge machining in the overlapping section occurring when there are a series of corner sections. Further, the possibility of wire electrode breakage during wire electrical discharge machining in the overlapping section is reduced.

(8) The sum of the first adjustment ratio and the second adjustment ratio may be 100%. This improves the accuracy of wire electrical discharge machining in the overlapping section occurring when there are a series of corner sections. Further, the possibility of wire electrode breakage during wire electrical discharge machining in the overlapping section is reduced.

(9) When the adjustment is performed, the first adjustment ratio and the second adjustment ratio may be calculated based on the first ratio, the second ratio, and the predetermined weighting factor ($\alpha$) applied to at least one of the first ratio or the second ratio. Thus, the control amount corresponding to one of the first ratio and the second ratio to which a larger weighting factor is applied can have a larger influence on the machining control in the overlapping section than the control amount corresponding to the other ratio. Further, it is possible to facilitate fine adjustment of the degree of change in the control amount corresponding to the ratio to which the weighting factor is applied.

(10) Each of the first control amount and the second control amount may include at least one of the control amount for controlling the speed at which the wire electrical discharge machine performs the machining on the workpiece, the control amount for controlling the magnitude of the pulse voltage applied to the inter-electrode gap when the wire electrical discharge machine generates the electrical discharge, the control amount for controlling the number of pulses per unit time of the pulse voltage applied to the inter-electrode gap when the wire electrical discharge machine generates the electrical discharge, or the control amount for controlling the ejection flow amount per unit time of the dielectric working fluid supplied to the inter-electrode gap when the wire electrical discharge machine generates the electrical discharge.

This may further improve the accuracy of wire electrical discharge machining in the overlapping section occurring when there are a series of the corner sections. In addition, the possibility of wire electrode breakage during wire electrical discharge machining in the overlapping section may be further reduced.

Reference Signs List

    10: wire electrical discharge machine
    12: table
    14: wire electrode
    16: upper wire guide
    18: lower wire guide
    20: upper guide block
    22: lower guide block
    24: wire bobbin
    26: collection box
    28: machining power supply
    30: control device
    32: feed drive unit
    34: work pan
    36: roller
    38: bed
    40: displacement drive unit
    44: pinch roller
    46: feed roller
    48: pump
    310: machining control unit
    320: adjustment unit
    510, 560, 610, 660, 710, 760: graph

**Claims**

1. A control device (30) for a wire electrical discharge machine (10) configured to perform machining on a workpiece (W) by generating electrical discharge at an inter-electrode gap (G) formed between the workpiece and a wire electrode (14) while moving the wire electrode relative to the workpiece along a machining path (RT), comprising:

    a machining control unit (310) configured to: control the wire electrical discharge machine in accordance with a plurality of control amounts based on a reference machining condition; in a first corner section (CI), control the wire electrical discharge machine by changing at least one first control amount (V) of the plurality of control amounts, based on a machining condition for the first corner section; and in a second corner section (CO) following the first corner section, control the wire electrical discharge machine by changing at least one second control amount (F) of the plurality of control amounts, based on a machining condition for the second corner section, the second control amount being different from the first control amount; and
an adjustment unit (320) configured to, in an overlapping section (DS) in which change in the first control amount and change in the second control amount overlap each other, calculate a first ratio (RVk) which is a ratio of a current change amount ($\Delta$Vk) to a maximum change amount ($\Delta$Vmax) of the first control amount and a second ratio (RFk) which is a ratio of a current change amount ($\Delta$Fk) to a maximum change amount ($\Delta$Fmax) of the second control amount, and adjust each of the current first control amount and the current second control amount, based on the first ratio and the second ratio,
wherein, in the overlapping section in which change in the first control amount and change in the second control amount overlap each other, the machining control unit controls the wire electrical discharge machine in accordance with an adjusted first control amount and an adjusted second control amount.

2. The control device for the wire electrical discharge machine according to claim 1, wherein
the adjustment unit calculates a first adjustment ratio (RVAk) and a second adjustment ratio (RFAk) based on the first ratio and the second ratio, adjusts the current first control amount based on the first adjustment ratio, and adjusts the current second control amount based on the second adjustment ratio.

3. The control device for the wire electrical discharge machine according to claim 2, wherein
a sum of the first adjustment ratio and the second adjustment ratio is 100%.

4. The control device for the wire electrical discharge machine according to claim 2 or 3, wherein
the adjustment unit calculates the first adjustment ratio and the second adjustment ratio based on the first ratio, the second ratio, and a predetermined weighting factor ($\alpha$) applied to at least one of the first ratio or the second ratio.

5. The control device for the wire electrical discharge machine according to any one of claims 1 to 4, wherein
each of the first control amount and the second control amount includes at least one of a control amount for controlling a speed at which the wire electrical discharge machine performs machining on the workpiece, a control amount for controlling a magnitude of a pulse voltage applied to the inter-electrode gap when the wire electrical discharge machine generates the electrical discharge, a control amount for controlling a number of pulses per unit time of the pulse voltage applied to the inter-electrode gap when the wire electrical discharge machine generates the electrical discharge, or a control amount for controlling an ejection flow amount per unit time of a dielectric working fluid supplied to the inter-electrode gap when the wire electrical discharge machine generates the electrical discharge.

6. A control method for a wire electrical discharge machine (10) configured to perform machining on a workpiece (W) by generating electrical discharge at an inter-electrode gap (G) formed between the workpiece and a wire electrode (14) while moving the wire electrode relative to the workpiece along a machining path (RT), comprising:

   performing machining control for: controlling the wire electrical discharge machine in accordance with a plurality of control amounts based on a reference machining condition; in a first corner section (CI), controlling the wire electrical discharge machine by changing at least one first control amount (V) of the plurality of control amounts, based on a machining condition for the first corner section; and in a second corner section (CO) following the first corner section, controlling the wire electrical discharge machine by changing at least one second control amount (F) of the plurality of control amounts, based on a machining condition for the second corner section, the second control amount being different from the first control amount; and
   performing adjustment for, in an overlapping section (DS) in which change in the first control amount and change in the second control amount overlap each other, calculating a first ratio (RVk) which is a ratio of a current change amount ($\Delta$Vk) to a maximum change amount ($\Delta$Vmax) of the first control amount and a second ratio (RFk) which is a ratio of a current change amount ($\Delta$Fk) to a maximum change amount ($\Delta$Fmax) of the second control amount, and adjusting each of the current first control amount and the current second control amount, based on the first ratio and the second ratio,
   wherein, when the machining control is performed, in the overlapping section in which change in the first control amount and change in the second control amount overlap each other, the wire electrical discharge machine is controlled in accordance with an adjusted first control amount and an adjusted second control amount.

7. The control method for the wire electrical discharge machine according to claim 6, wherein
when the adjustment is performed, a first adjustment ratio (RVAk) and a second adjustment ratio (RFAk) are calculated based on the first ratio and the second ratio, the current first control amount is adjusted based on the first adjustment ratio, and the current second control amount is adjusted based on the second adjustment ratio.

8. The control method for the wire electrical discharge machine according to claim 7, wherein a sum of the first adjustment ratio and the second adjustment ratio is 100%.

9. The control method for the wire electrical discharge machine according to claim 7 or 8, wherein when the adjustment is performed, the first adjustment ratio and the second adjustment ratio are calculated based on the first ratio, the second ratio, and a predetermined weighting factor ($\alpha$) applied to at least one of the first ratio or the second ratio.

10. The control method for the wire electrical discharge machine according to any one of claims 6 to 9, wherein each of the first control amount and the second control amount includes at least one of a control amount for controlling a speed at which the wire electrical discharge machine performs machining on the workpiece, a control amount for controlling a magnitude of a pulse voltage applied to the inter-electrode gap when the wire electrical discharge machine generates the electrical discharge, a control amount for controlling a number of pulses per unit time of the pulse voltage applied to the inter-electrode gap when the wire electrical discharge machine generates the electrical discharge, or a control amount for controlling an ejection flow amount per unit time of a dielectric working fluid supplied to the inter-electrode gap when the wire electrical discharge machine generates the electrical discharge.

FIG. 1

EP 4 374 997 A1

# FIG. 2

# FIG. 3

OUTER CORNER SECTION CO

OVERLAPPING SECTION DS

INNER CORNER SECTION CI

RT

W

PC

PD

PB

14

PA

# FIG. 4

## FIG. 5

```
( START )
   │
   ▼◄─────────────────────────────┐
┌──────────────────────────────────┐ S510
│ PERFORM MACHINING CONTROL IN ACCORDANCE │
│    WITH REFERENCE CONTROL AMOUNT   │
└──────────────────────────────────┘
   │
   ▼                                         S512
< START MACHINING OF INNER CORNER SECTION OR NOT? >──NO─┐
   │ YES ◄──────────────────────────────────────────┐  │
   ▼                                              │  │
┌──────────────────────────────────┐ S514         │  │
│ CHANGE FIRST CONTROL AMOUNT TO VALUE FOR INNER │  │  │
│ CORNER SECTION AND PERFORM MACHINING CONTROL │  │  │
└──────────────────────────────────┘              │  │
   │                                              │  │
   ▼                                         S516  │  │
< START MACHINING OF OUTER CORNER SECTION OR NOT? >─NO┘  │
   │ YES ◄──────────────────────────────────────────┐  │
   ▼                                              │  │
┌──────────────────────────────────┐ S518         │  │
│ CALCULATE FIRST RATIO AND SECOND RATIO │        │  │
└──────────────────────────────────┘              │  │
   │                                              │  │
   ▼                                              │  │
┌──────────────────────────────────┐ S520         │  │
│ CALCULATE FIRST ADJUSTMENT RATIO │              │  │
│    AND SECOND ADJUSTMENT RATIO    │             │  │
└──────────────────────────────────┘              │  │
   │                                              │  │
   ▼                                              │  │
┌──────────────────────────────────┐ S522         │  │
│ ADJUST CONTROL AMOUNTS CHANGING IN OVERLAPPING MANNER │ │
└──────────────────────────────────┘              │  │
   │                                              │  │
   ▼                                              │  │
┌──────────────────────────────────┐ S524         │  │
│ PERFORM MACHINING CONTROL IN ACCORDANCE │       │  │
│    WITH ADJUSTED CONTROL AMOUNTS   │            │  │
└──────────────────────────────────┘              │  │
   │                                              │  │
   ▼                                         S526  │  │
< HAS FIRST CONTROL AMOUNT CHANGED               │  │
  TO REFERENCE CONTROL AMOUNT? >───NO────────────┘  │
   │ YES ◄─────────────────────────────────────┐     │
   ▼                                         │     │
┌──────────────────────────────────┐ S528     │     │
│ PERFORM MACHINING CONTROL IN ACCORDANCE WITH │  │     │
│   CONTROL AMOUNT FOR OUTER CORNER SECTION  │  │     │
└──────────────────────────────────┘          │     │
   │                                          │     │
   ▼                                    S530   │     │
< HAS MACHINING OF OUTER CORNER SECTION BEEN COMPLETED? >─NO┘
   │ YES ◄───────────────────────────────────────┐  │
   ▼                                           │  │
┌──────────────────────────────────┐ S532       │  │
│ CHANGE SECOND CONTROL AMOUNT TO REFERENCE │   │  │
│ CONTROL AMOUNT AND PERFORM MACHINING CONTROL │ │  │
└──────────────────────────────────┘            │  │
   │                                           │  │
   ▼                                      S534  │  │
< HAS MACHINING BEEN COMPLETED? >───NO──────────┘  │
   │ YES
   ▼
( END )
```

# FIG. 6

( START )

| | |
|---|---|
| PERFORM MACHINING CONTROL IN ACCORDANCE WITH REFERENCE CONTROL AMOUNT | S510 |

START MACHINING OF INNER CORNER SECTION OR NOT? — S512 NO

YES

| | |
|---|---|
| CHANGE FIRST CONTROL AMOUNT TO VALUE FOR INNER CORNER SECTION AND PERFORM MACHINING CONTROL | S514 |

START MACHINING OF OUTER CORNER SECTION OR NOT? — S516 NO

YES

| | |
|---|---|
| CALCULATE FIRST RATIO AND SECOND RATIO | S518 |

| | |
|---|---|
| CALCULATE FIRST ADJUSTMENT RATIO AND SECOND ADJUSTMENT RATIO BASED ON WEIGHTING FACTOR | S620 |

| | |
|---|---|
| ADJUST CONTROL AMOUNTS CHANGING IN OVERLAPPING MANNER | S522 |

| | |
|---|---|
| PERFORM MACHINING CONTROL IN ACCORDANCE WITH ADJUSTED CONTROL AMOUNTS | S524 |

HAS FIRST CONTROL AMOUNT CHANGED TO REFERENCE CONTROL AMOUNT? — S526 NO

YES

| | |
|---|---|
| PERFORM MACHINING CONTROL IN ACCORDANCE WITH CONTROL AMOUNT FOR OUTER CORNER SECTION | S528 |

HAS MACHINING OF OUTER CORNER SECTION BEEN COMPLETED? — S530 NO

YES

| | |
|---|---|
| CHANGE SECOND CONTROL AMOUNT TO REFERENCE CONTROL AMOUNT AND PERFORM MACHINING CONTROL | S532 |

HAS MACHINING BEEN COMPLETED? — S534 NO

YES

( END )

20

## INTERNATIONAL SEARCH REPORT

International application No.

**PCT/JP2021/032383**

### A. CLASSIFICATION OF SUBJECT MATTER

***B23H 7/02***(2006.01)i
FI:  B23H7/02 R

According to International Patent Classification (IPC) or to both national classification and IPC

### B. FIELDS SEARCHED

Minimum documentation searched (classification system followed by classification symbols)

B23H7/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/157575 A1 (FANUC CORP.) 12 August 2021 (2021-08-12) paragraphs [0043]-[0051] | 1-10 |
| A | JP 6-102923 A (HONDA MOTOR CO., LTD.) 15 April 1994 (1994-04-15) paragraphs [0046]-[0051] | 1-10 |

☐ Further documents are listed in the continuation of Box C.      ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **29 October 2021** | **09 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/032383**

| Patent document cited in search report | | | Publication date (day/month/year) | Patent family member(s) | Publication date (day/month/year) |
|---|---|---|---|---|---|
| WO | 2021/157575 | A1 | 12 August 2021 | (Family: none) | |
| JP | 6-102923 | A | 15 April 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015063932 A1